# EUROPEAN PATENT SPECIFICATION

(11) **EP 4 376 681 B1**
(45) Date of publication and mention of the grant of the patent: **08.04.2026**
(21) Application number: 22754108.3
(22) Date of filing: 29.07.2022
(51) Int. Cl.: A47J 31/40, A47J 31/44

(54) **BEVERAGE PREPARATION SYSTEM**
GETRÄNKEZUBEREITUNGSSYSTEM
SYSTÈME DE PRÉPARATION DE BOISSONS

(30) Priority: 30.07.2021 EP 21188906
(43) Date of publication of application: 05.06.2024
(73) Proprietor: Société des Produits Nestlé S.A., 1800 Vevey (CH)
(72) Inventor: BEAUSIRE, Cédric, 1372 Bavois (CH); VUAGNIAUX, Didier, 1188 Gimel (CH)
(74) Representative: Pasquino, Fabio
(86) International application number: PCT/EP2022/071432
(87) International publication number: WO 2023/006991

(56) References cited:
- WO-A1-2019/091775
- WO-A1-2019/096830
- WO-A1-2021/110652
- GB-A- 2 576 378

## Description

### Field of the invention

The present invention relates to a beverage system using packs of beverage ingredient.

### Background of the invention

WO 2021/110652 describes a beverage preparation machine for the preparation of beverages from packs holding beverage ingredients. The system machine a specific fluid processing device designed to pierce the bottom of a pack hold inside the machine, to introduce fluid therein through its fluid inlet and to dispense the beverage resulting from the mixing of the ingredient and fluid though a specific dispensing outlet of this device. Two different relative positions of the device and the pack enable either the introduction of fluid or the dispensing of beverage.

The packs used in this machine are generally made of a flexible material such as the flexible packages described in WO 2022/022902. WO 2019/096830 describes a further beverage preparation machine for the preparation of beverages from packs holding beverage ingredients.

In the field of beverage system using a machine to prepare a beverage from a single dose container, the container can be provided with a code that supplies information about the beverage preparation to have the preparation more automatic for the user. The preparation information encoded by a code on the pack is read by the machine to define a recipe, and the recipe is used by the machine to optimise the preparation process in a manner specific to the container. In particular, the encoded preparation information may comprise operating parameters selected in the beverage preparation process, including : fluid temperature, fluid pressure, preparation duration and fluid volume.

Usually, codes can only be read from a rigid support of the container. For packs made of flexible material, a drawback is that a code is hardly readable from the flexible parts. It is a problem for the packs mentioned above.

Therefore, in spite of the effort already invested in the development of said systems further improvements are desirable.

### Summary of the invention

In a first aspect of the invention, there is provided a beverage production system comprising a pack and a module for producing a beverage from said pack,
- said pack comprising an ingredient, said ingredient being configured to be mixed with a fluid to produce a beverage,
   said pack presenting a plane shape oriented along a plane (P) and comprising two longitudinal plane walls extending along this plane P, and
   the bottom side of said pack being configured for being openable, and
   said pack comprising a readable code, said code being positioned on at least one of the two longitudinal plane walls, and
- said module comprising :
   - a movable fluid processing device configured to cooperate with the bottom of the pack to introduce a fluid in said pack and to dispense a beverage from the pack, and
   - a code reader,
   - a pack holder assembly, said pack holder assembly comprising a pack chamber and a movable interacting device wherein :
      . the pack chamber is adapted for receiving said pack through an upper pack inlet and for holding said pack so that the plane (P) of the plane shape is oriented in an essentially vertical position inside the module, and
      said chamber presenting a bottom opening configured to enable access of the movable fluid processing device to at least the bottom side of said pack hold in the chamber, and said chamber presenting a side opening positioned in front of the code reader,
      . the movable interacting device is configured to move between :
         - a first fixing position wherein said interacting device interacts with the pack received in the chamber inside the pack holder assembly, and,
         - a second release position wherein said interacting device does not interact with the pack received in the chamber, and
      said movable interacting device comprises a pushing device configured so that :
      . when the movable interacting device moves to the first fixing position, said pushing device pushes the readable code of the pack received in the chamber to a reading head of the code reader until said readable code is in contact with the reading head,
      . when the movable interacting device is in the second release position, said pushing device is positioned away from the pack received in the chamber.

This system comprises a pack comprising a food or beverage ingredient able to produce a beverage further to mixing with an aqueous fluid, preferably water.

This food or beverage ingredient packed in the package can be a water soluble powder or a soluble concentrate in liquid or semi-liquid form. In that embodiment water dissolves the beverage ingredient. The ingredient can be selected within the list of : soups, fruit juices, vegetable juices, bouillons, coffee, chocolate, tea, milk or creamer, smoothies, purees, coulis, creams or any combination thereof. Preferably, the food or beverage ingredient is a soluble food or beverage ingredient selected in the list of :
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid or encapsulated pieces. This food or beverage ingredient packed in the package can also contain a food or beverage ingredient able to be infused like a roast and ground coffee, or tea leaves. In that embodiment water extracts the beverage ingredient.

The pack presents a plane shape oriented along a plane (P). This shape is provided by two longitudinal plane walls extending along this plane P. Preferably, the lateral edges of these two longitudinal plane walls are sealed to each other and form a sealing area, which is flat and flexible. Preferably most of the walls of the pack are made of flexible material. Yet in less preferred embodiments, the pack can be made at least partly of semi-flexible.

The pack comprises a readable code positioned on at least one of the two longitudinal plane walls, preferably close to the bottom of the pack. In one preferred embodiment, the code is positioned in a part of the sealing area. If the pack presents a symmetric geometry about its longitudinal plane, it is preferably that the pack is provided with at least two codes, one code being positioned on each longitudinal plane walls so that the pack can be introduced in whatever sense inside the pack chamber ; that guarantees that at least one of the codes can be read by the code reader.

The code of the pack can be any type of code like : mechanical code, optical code (including colour code, codes printed with non-visible ink, one-dimension barcode, two dimensions bar code, QRcode), RFID tags, magnetic code, conductivity code. It is preferably an optical code. Generally, the code provides directly or indirectly information related to the contained product, said information being comprised in the list of : identification of the product, quantity of product, beverage preparation parameters or any combinations thereof. The beverage preparation parameters can provide :
- water volume, water temperature and/or water pressure, and/or
- time sequence for water injection, air injection, pause, injection and dispensing in sequential or simultaneous manner.

The pack is configured for being openable at its bottom in order to introduce the fluid from below inside the pack and to dispense the prepared beverage from the pack through the same place. Preferably, an area of the bottom side is configured for being openable by piercing, tearing or puncturing in particular by applying an upwardly pointed, acute or sharp device, such as the fluid processing device, to said area. Preferably this area is positioned at the middle of the transversal dimension of the longitudinal shape of the pack. Preferably this openable area is made of a flexible material.

The system comprises a module for producing a beverage which comprises a fluid processing device configured to cooperate with the bottom of the pack to introduce a fluid in the pack in order to prepare a beverage inside the pack and then to dispense the prepared beverage from the pack. This fluid processing device can be the device described in WO 2021/110650. This fluid processing device is movable in different positions, said positions comprising at least one position where the device is out of the pack and at least one other position where the device is introduced inside the pack during the beverage preparation.

The module includes a code reading system with a code reader to read the code of the pack. Preferably, the code reading system of the module includes a code reader with an image capturing unit and a reading head housing the image capturing unit to capture a digital image of the code. The code reader may include an image capturing unit (e.g. a camera) a lens and an outermost aperture (e.g. a reading window). An outermost portion of the code reader may be referred to as a reading head.

In addition, said module comprises a pack holder assembly configured to hold the pack within the module.

This pack holder assembly comprises a pack chamber adapted for receiving a pack for a beverage preparation inside the module. The pack chamber comprises an upper pack inlet to introduce the new pack and the pack chamber is configured for holding the pack in an essentially vertical position inside the module. This vertical position guarantees the efficient preparation of the beverage and particularly the dispensing of the beverage from the pack so that the less possible liquid remains inside the pack at the end of the extraction and when the pack must be removed from the system to be thrown to the bin.

The pack chamber presents a bottom opening configured to enable an access of the movable fluid processing device to the bottom of said pack hold in the chamber. This access or passage is particularly designed to enable the upwards movement of the fluid processing device to the bottom of the pack when it is hold inside the chamber.

The pack holder assembly comprises a movable interacting device too. This interacting device is movable between two positions.

In its first fixing position, this interacting device interacts with the pack received in the chamber and preferably locks it inside the pack holder assembly.

In its second release position, this interacting device does not interact with the pack although the pack is present in the chamber.

This interacting device comprises a pushing device configured to be displaced with the interacting device, during this movement from the second release position to the first fixing position, to push the part of the pack that supports the readable code to the reading head of the code reader. The pushing device is positioned so as to push the part of the flexible longitudinal plane wall on which the code is present and that is accessible through the opening provided in the chamber. The movement of the pushing device is defined so that, when the interacting device is in its first fixing position, the part of the pack supporting the code is pinched between the surface of the pushing device and the surface of the reading head of the code reader. Consequently, efficient reading can be obtained on the flexible material of the pack. The movement of the pushing device can be a short translation or a short rotation. Preferably, the surface of the pushing device and the surface of the reading head are plane and flat, and in the fixing position, these surfaces are parallel to each other.

When the movable interacting device is in the second release position, the pushing device is positioned away and is separated from the pack still present in the chamber. Accordingly, the pack can be removed from the chamber without interacting with the surface of the reading head, limiting damages of the surface of this head like scratching. The benefit is the same when the pack is introduced inside the chamber.

Preferably, this pack holder assembly comprises a door, said door being movable relatively to the pack chamber and being configured to be positioned in at least :
- a first closed position wherein said door covers the pack inlet of the pack chamber and is able to enclose the pack inside the pack chamber, and
- a second opened position wherein said door uncovers the pack inlet of the pack chamber, and
the movable interacting device is mechanically connected to the door so that it is configured to be pushed away from the chamber when the door is in the second opened position and to be pushed to the chamber when the door is in the first closed position.

In the first position called "closed", the door covers the pack inlet of the pack chamber and is able to enclose the pack inside the pack chamber if one pack has been introduced inside the chamber, and consequently a beverage preparation is possible.

In the second position called "opened", the door uncovers the pack inlet of the pack chamber and consequently the introduction of a pack inside the pack holder is enabled.

Due to the connection between the interacting device and the door, the position of the movable interacting device is coordinated with the position of the door so that the interacting device moves the pushing device when the door is closed and releases the pack when the door is opened, enabling in that last case the introduction or the removal of a pack in or out of the module.

In one preferred embodiment, the pack comprises at least two holes and/or deformable areas and the interacting device comprises corresponding locking means, preferably pins, said pins being configured to fit in said holes and/or deformable areas of the pack when the door is in the first closed position.

The at least two holes and/or deformable areas in the pack are usually provided transversally to the plane shape of the pack.

In one preferred embodiment, the pack comprises a front wall and a back wall, said front and back walls being made of flexible material, and at least the edges of the bottom parts of said walls are sealed together around the openable area of the bottom side, and the holes and/or deformable areas are provided in said sealed edges.

Preferably they are positioned symmetrically around the axis extending longitudinally along the middle of the plane shape of the pack.

Preferably they are positioned close to the bottom of the pack.

In the preferred embodiment, these holes are positioned in a part of the sealing area of the longitudinal plane walls of the pack.

The size (length and diameter) of the corresponding pins of the interacting device and the distance between the pins are set to enter in the two holes and/or deformable areas. Usually, two holes and two pins are sufficient to fix the pack in the pack holding assembly.

Preferably in the system, the fluid processing device comprises :
- at least one fluid inlet for introducing a fluid into the pack hold in the chamber for the preparation of a beverage by mixing said fluid with the ingredient contained in said pack, and
- at least one beverage outlet for dispensing said prepared beverage from said pack hold in the chamber.

In such a preferred embodiment, the fluid processing device corresponds to one of the devices disclosed in WO 2021/110650, WO 2021/110652 or WO 2021/110654.

Preferably, an actuating device (such as a motor) is configured to move the fluid processing device to the pack whereas the pack is hold in the chamber in a fixed manner.

In the present invention, fluid covers either any aqueous diluent that can be mixed with a soluble beverage ingredient to prepare a beverage, like water, carbonated water, milk, etc. (preferably, water is the preferred aqueous diluent) or any gaseous fluid such as for example air. When referring to aqueous fluid, water is the preferred fluid; when referring to gaseous fluid, air is the preferred fluid.

According to the invention, the package is arranged essentially vertically during the production and dispensing of the food or beverage product.

According to the present invention, the aqueous fluid, typically water, is supplied into the package at any temperature : cold, ambient or hot, depending on the type of food or beverage product to be prepared.

Preferably, the module comprises :
- a receiving area configured to receive and hold the pack holder assembly, and
- an electrical switch, and
- when the pack holder assembly is in said receiving area, a contacting part of the door is designed to cooperate with the electrical switch so that :
   - in the second opened position of the door, the contacting part of the door directly or indirectly switches off the electrical switch, and
   - in the first closed position of the door, the contacting part of the door directly or indirectly switches on the electrical switch.

This electrical switch of the module enables the automatic preparation of a beverage with the system, in particular the supply of electrical power to the different electrical devices of the machine such as the actuating device of the fluid processing device.

The door can cooperate directly with this switch through a shape designed to push the switch when the door is closed or indirectly through a movable member designed to move relatively to the electrical switch of the module between a first and a second position, wherein in the first position said movable member releases said electrical switch and a second position said movable member pushes said electrical switch.

With this automatic switch off of electrical power when the door is opened, no risk of injury of the user can happen for example by sudden projection of hot water from the fluid processing device while no pack is present in the assembly and the door is opened.

Preferably, the module comprises a receiving area configured to receive and hold the pack holder assembly and said receiving area comprises at least one first magnet, and the door comprises at least one corresponding second magnet, and
said first magnet and second magnet are positioned in the receiving area and in the door respectively so that, when the door is closed, the first and second magnets cooperate.

It has been observed that during a beverage preparation, in particular with a pack made of flexible walls, this pack can inflate inside the chamber and can exert a force on the inside wall of the door such that the door is pushed away and opens during the preparation.

Magnets cooperating between the door and the receiving area of the module prevent this undesired sudden opening.

It is preferred that said first magnet and second magnet are positioned at the upper parts of the receiving area and of the door respectively. Actually, it was observed that it is the upper part of the pack hold in the chamber that inflates and opens the door. By exerting an attraction force between the door and the receiving area at the upper part of the door, the risk that the door opens is limited. For the same reason, it is preferred that the first and second magnets are positioned close to the contacting part of the door designed to interfere with the electrical switch of the module. Consequently, it is preferred that said contacting part of the door is positioned in the upper part of the door.

Preferably, the pack chamber comprises at least one internal front wall, this internal front wall being positioned below the movable door, and at least one rib rises from said internal front wall inside the chamber.

By extending inside the chamber, the end of this rib is close to the surface of the pack or even contacts this surface. Such a rib helps to prevent the upper part of the pack to inflate too much as mentioned above and to prevent the sudden opening of the door too.

Preferably several ribs are designed in the internal front wall.

In a second aspect of the invention, there is provided a pack holder assembly for a beverage production system such as described above, wherein said pack holder assembly comprises a pack chamber and a movable interacting device wherein :
- the pack chamber defines an internal volume adapted for receiving a pack through an upper pack inlet and for holding said pack, and said chamber presents a side opening configured to face the code reader of the module,
- the movable interacting device is configured to move between a first fixing position and a second release position, and said movable interacting device comprises a pushing device configured so that :
   - when the movable interacting device is in the first interacting position, said pushing device is positioned inside the internal volume of the chamber so as to be close to and in contact with a part of the pack to push the part of the pack comprising the readable code and that is accessible through the side opening to a reading head of the code reader, and
   - when the movable interacting device is in the second release position, said pushing device is removed from the internal volume of the chamber.

By "removed from the internal volume of the chamber", it is meant that, in this position, the pushing device does not extend in the internal volume to a position where it prevents the introduction and correct positioning of a pack in the chamber.

Preferably, the pack holder assembly comprises a door, said door being movable relatively to the pack chamber and being configured to be positioned in at least :
- a first closed position wherein said door covers the pack inlet of the pack chamber, and
- a second opened position wherein said door uncovers the pack inlet of the pack chamber, and
wherein the movable interacting device is mechanically connected to the door so that it is configured to be pushed away from the chamber when the door is in the second opened position and to be pushed to the chamber when the door is in the first closed position. Preferably, the door comprises at least one magnet, said magnet being positioned at the upper side of the door.

Preferably, the door comprises a contacting part designed to cooperate with an electrical switch of the module, and this contacting part is positioned in the upper part of the door.

In a third aspect, there is provided the use of a pack holder assembly such as described in the above second aspect in a beverage production system such as described in the above first aspect.

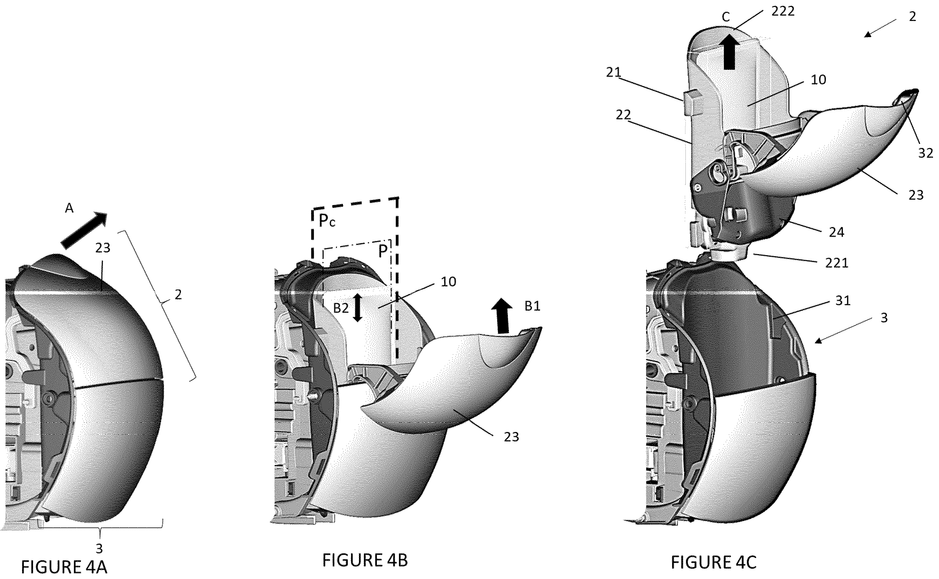

In the present application the terms "internal", "back", "front", "top" "bottom", "lateral", "upper" and "lower" are used to describe the relational positioning of features of the invention. These terms should be understood to refer to the pack in its normal orientation when positioned in a beverage preparation dispenser for the production of a beverage as shown in the figures 4A-4C.

Further objects and advantageous features of the invention will be apparent from the claims, from the detailed description, and annexed drawings.

### Brief description of the drawings

Specific embodiments of the invention are now described further, by way of example, with reference to the following drawings in which :
- Figure 1 is a schematic drawing of a beverage production system according to the invention,
- Figure 2 is perspective view of a pack that can be used in the beverage production system,
- Figure 3 is perspective view and a cross section view of a fluid processing device that can be used in the beverage production system,
- Figures 4A-4C are views of the beverage production system according to the invention,
- Figure 4D is a view of back wall of the receiving area of the module of Figures 4A-4C,
- Figures 4E and 4F are views of the back side of the pack holder assembly without a pack and with a pack respectively,
- Figures 5A and 5B are side view and horizontal cross sectional view along C-C of the pack chamber with the door opened,
- Figure 6A and 6B are vertical section of the bottom of the pack holder assembly of Figures 5B and 5B respectively,
- Figures 7A and 7B are cross-sectional view of the pack holder assembly of Figures 6A and 6B respectively taken along plane CC,
- Figures 8A-8B are views of the module of the beverage production system illustrating the locking means of the door,
- Figure 9 is a perspective top view of the of the pack chamber with the door opened and a pack inside,

### Detailed description of exemplary embodiments

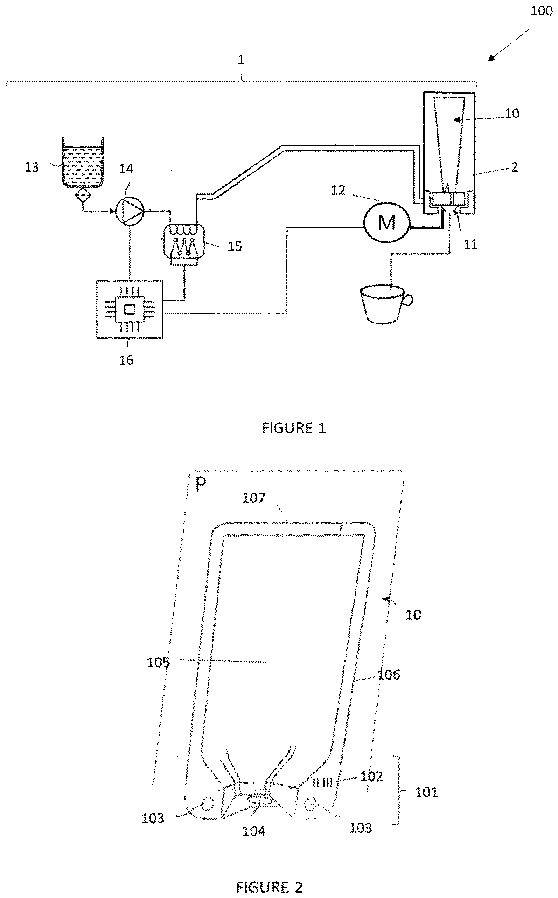

**Figure 1** illustrates schematically a beverage production system 100 according to the invention.

The system 100 comprises a module 1 and a pack 10. The module is adapted for receiving the pack and producing a beverage from said pack.

The module 1 comprises a pack holder assembly 2 and a fluid system to introduce a fluid inside the pack.

The fluid system usually comprises a fluid source 13, like a water tank, pumping means 14 to pump the fluid from the source. Usually heating and/or cooling means are part of the system to adapt the temperature of the fluid to be introduced inside the pack.

The fluid is supplied to a fluid processing device 11 configured to cooperate with the bottom of the pack in order to introduce the fluid in said pack.

Generally, the module comprises am actuating device 12 move this fluid processing device 11 to said pack hold in the pack holder assembly 2.

The module comprises usually a system control unit 16 to control the above different devices for the preparation of a beverage from a pack.

Such a beverage production system 100 corresponds to the system described in the publications WO 2021/110650, WO 2021/110654 and/or WO 2021/110652.

**Figure 2** is a perspective view of a pack 10 that can be used in the beverage production system 100 according to the invention.

This pack comprises an ingredient that is configured to be mixed with a fluid to produce a beverage. The pack presents a plane shape oriented along a plane P. Two longitudinal plane walls 105 (front and back) extends along this plane P. In the preferred embodiment, these walls are made of a flexible material and the lateral edges 106 of these walls are sealed as well as the edges at the top end 107. The bottom side 101 of said pack is configured for being openable, preferably through a pierceable area 104. The openable area is positioned at an edge of the plane P and enables the dispensing of the beverage along a direction comprised in this plane P.

In the particular illustrated embodiment, the pack comprises two holes 103 at the bottom side 101. These holes are positioned around the openable area 104 of the bottom side of the pack. The pack 10 comprises a readable code 102 in its bottom side 101.

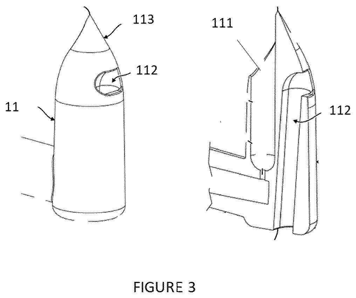

**Figure 3** is perspective view and a cross section view of a fluid processing device 11 that can be used in the beverage production system. It comprises :
- a fluid inlet 111 for introducing a fluid into the openable area 104 of the pack hold in the chamber, and
- a beverage outlet 112 for dispensing the prepared beverage from said pack hold in the chamber.

The actuating device 12 is adapted to move this fluid processing device 11 to said pack hold in the chamber and in particular the pointed part 113 to the openable area 104 in order to open the openable area 104 or any membrane or cover provided at this area. Usually, the fluid processing device is adapted to move along a direction that is comprised in the plane P of the pack.

Other fluid processing device 11 such as described in WO 2021/110650 can be used in the system of the present invention.

**Figures 4A to 4C** illustrates the part of the module 1 configured to receive the pack. This part of the module comprises a pack holder assembly 2 hold in a receiving area 3 of the module. This

In Figure 4A, the pack holder assembly 2 is positioned inside the receiving area 3. The pack holder assembly comprises a door 23 that can be opened, as illustrated by the arrow A.

When the door is opened, as illustrated in Figure 4B, a pack 10 can be introduced in the pack chamber 22 of the pack holder assembly 2 or removed therefrom as desired by the operator and as illustrated by the arrows B2. It can be observed that the plane P of the pack extends along the plane Pc defined by the walls of the pack chamber 22. In the particular embodiment of Figures 4A-4C, the whole pack holder assembly 2 can be removed from the receiving area 3 for example by handling the door 23 and pulling it upwardly as illustrated by the arrow B1. In alternative embodiments, the pack holder assembly may not be removable from the receiving area or may be removable by pulling upwardly a handle at the upper part of the holder assembly or any other means to withdraw the assembly. Generally, it is preferable that the pack holder assembly 2 is removable for cleaning operations.

In addition, when the whole pack holder assembly 2 is removable from the receiving area 3, as shown in the Figure 4C, it can be used by the operator to bring a used pack 10 to the bin, which prevents manipulating the pack that may still contain liquid close to the machine. Then the pack holder assembly 2 can be positioned back inside the receiving area 3 : guiding means 21 on the wall of the pack chamber 22 cooperates with corresponding guiding means 31 of the receiving area.

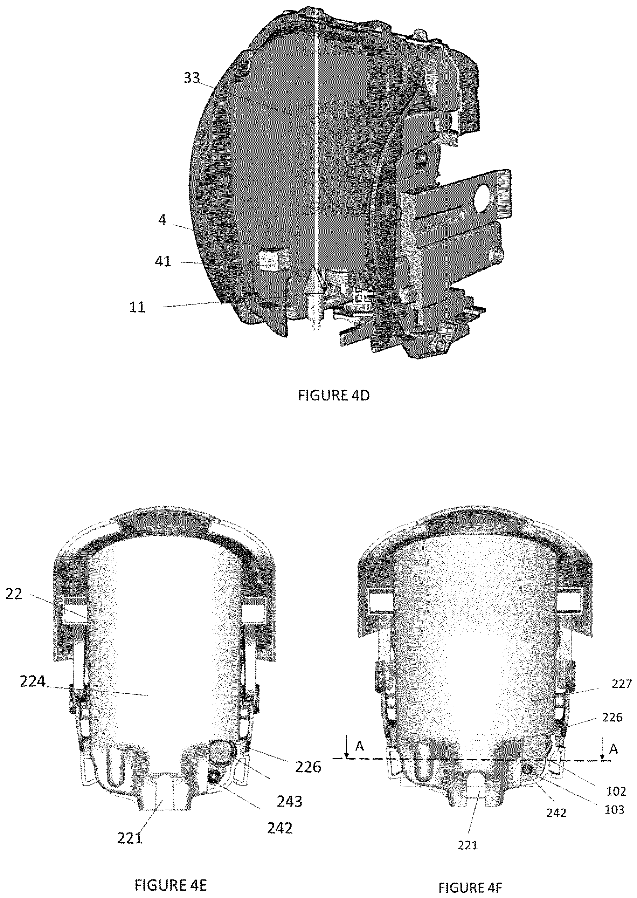

**Figure 4D** is a view of back wall 33 of the receiving area of the module of Figures 4A-4C wherein the pack holder assembly was removed and showing the code reader 4 and the fluid processing device 11.

The code reader 4 with its reading head 41 is oriented in direction of the pack holder assembly 2. The axis of the code reader 4 is oriented perpendicularly to the planes P, Pc of the pack and the chamber so that the part of the pack supporting the code 102 is arranged normal to and through a reading direction of the reading head (which is the direction in which code reader obtains an image of the code).

The fluid processing device 11 is at the bottom of the receiving area 3 and oriented upwardly in direction of the bottom of the pack holder assembly.

**Figure 4E** is a view of the back side of the pack holder assembly without a pack being introduced inside the chamber. The chamber comprises a bottom opening 221 designed to enable the introduction of the fluid processing device 11 inside the openable bottom of the pack hold in the chamber.

The back wall 224 of the chamber comprises a side opening 226 that faces the code reader 4 when the chamber is positioned inside the receiving area of the module. Accordingly, when a pack is hold in the chamber 22, the part of the pack bearing the code 102 is positioned at this opening 226 and is accessible for reading by a code reader of the module as illustrated in **Figure 4F** that shows the back side of the pack holder assembly with a pack present inside the chamber

The pack holder assembly comprises a movable pushing device 243, visible on Figure 4E, actuated by a movable interacting device of the assembly as described below.

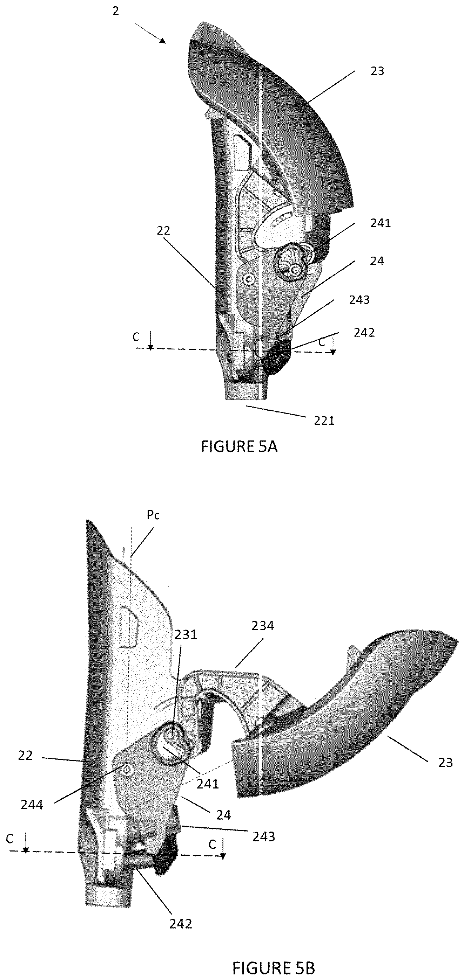

**Figures 5A and 5B** illustrate the pack holder assembly of Figures 4A and 4B. This pack holder assembly comprises an interacting device 24 that is configured to move between :
- a first fixing position wherein said interacting device interacts with the pack received in the chamber, as illustrated in Figure 5A and,
- a second release position wherein said interacting device does not interact with the pack received in the chamber, as illustrated in Figure 5B

By "interacting", it is meant that the interacting device is close to and in contact with a part of the pack. In Figure 5A, the bottom of the interacting device is close to the bottom of the pack in its interacting position, whereas in Figure 5B, the bottom of the interacting device is away from the bottom of the pack in its release position.

The movable interacting device 24 supports a movable pushing device 243 and consequently, this pushing device is displaced in accordance with the movement of the interacting device.

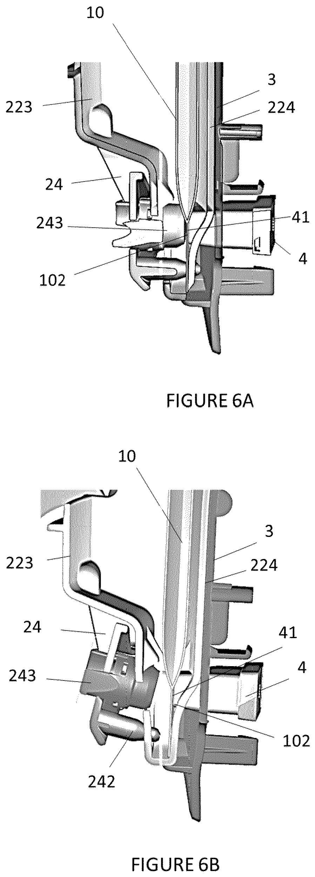

Since, in the second release position of Figure 5B, the movable interacting device 24 is tilted away from the pack and the chamber 22, the pushing device 243 is away from the internal volume of the chamber too and does not limit the movement of the pack. The pack can be introduced and removed easily from the chamber. **Figure 6B** is vertical section of the bottom of the pack holder assembly of Figure 5B inside the module 1 and illustrating the relative positions of the pack 10, the reading head 41 and the pushing device 243. In this position, the pack 10 can be received or removed from the chamber. During this movement, the part of the pack that supports the readable code 102 can move freely relatively to the code reader head 41, preferably without contacting it which could scratch the reader head of the code reader with time.

On the contrary, in the first interacting position of Figure 5A, the movable interacting device 24 is pulled to the chamber 22 and, accordingly, the pushing device 243 enters the internal volume of the chamber and pushes the part of the pack comprising the readable code 102 to the reading head 41 of the code reader 4 until said readable code is in contact with the reading head 41 as illustrated in **Figure 6A** that is a vertical section of the bottom of the pack holder assembly of Figure 5A inside the module 1. In that position, the flexible part of the sachet bearing the code is pinched between the reading head and the pushing device and the reading operation is improved.

By arranging the pushing device 243 to press to code 102 into the reading head, it may be ensured that the code is aligned with and at a precise distance to the code reader, which may improve reading accuracy.

Preferably, the reading head of the code reader is shaped to correspond in shape to a shape of the pushing device (e.g. the centres of their surfaces). For example, a head of the reader may be flat and/or curved to correspond in shape to the pushing device. A flat or slightly curved head may provide easier reading of the code due to less distortion of the optics.

The sachet 10 is hold inside the chamber so that its code 102 is in front of the code reader. In addition, as the door of the pack holder assembly is closed, its locking device 24 moves the pushing device 243 to the code reader 4 so that the part of the pack holding the code 102 and positioned between the pushing device and the code reader is urged in direction of the reader until the code is in contact with the reading head 41 of the code reader. As a result, reading is improved.

With the fluid processing device being positioned in the area of the code reader, vapour may deposit on the surface of the reading head or on the surface of the pack bearing the code and may prevent good reading. By pushing the part of the pack with the code to the reading head, the drawbacks of vapour from the fluid processing device can be avoided. Any debris from the processing unit (e.g. steam or precursor material) that is present on the code and would otherwise interfere with the code reading is displaced.

In one preferred embodiment, the pushing device 243 can be spring loaded in order to provide a softer contact during the movement towards the reading head that could be damaged after numerous operations.

Although, the illustrated embodiment shows the code 102 provided on the flat sealing area of the pack, the code can also be provided on another area of the longitudinal walls 105 and in that case, the pushing device provides a flattening function of the flexible wall during the code reading operation.

In the system of the invention, the position of the readable code 102 on the pack 10 is such that this code is visible through the side opening 226 of the chamber positioned in front of the code reader.

Similarly, the positions of the pushing device 243 and the side opening 226 in the locking device are set relatively to the position of the code reader 4 inside the module.

In the illustrated embodiment, it appears that this movable interacting device 24 is mechanically connected to the door 23 so that it is configured to be tilt away from the chamber 22 when the door is in the second opened position.

The opening movement of the door 23 is a rotation along hinges 231 attached to the side walls of the chamber 22. The door is connected to each of said hinges by arms 234 presenting a shape configured to enable the position of the door in the first opened position either when the assembly 2 is hold in the receiving area 3 of the module, as illustrated in Fig. 4B, or when the assembly 2 is fully removed from the module, as illustrated in Fig. 4C. For this reason, the arm is configured to skirt round the upper edge of the fixed lower cover 6 of the receiving area. The movable interacting device 24 is attached to the lateral walls of the chamber through dedicated hinges 244 enabling the rotation of said device. In addition, the movable interacting comprises a hole 2445 designed to cooperate with the hinges 231 of the door, so that :
- when the door 23 is opened, the bottom of the interacting device is tilted away from the pack chamber and the interacting device 24 is in its second release position,
- when the door 23 is closed, the bottom of the interacting device is moved to the pack chamber and the interacting device 24 is in its first fixing position,

In addition, in the specific illustrated embodiment, this interacting device 24 comprises two pins 242 configured to fit in corresponding holes 103 of the pack when the door 23 is in the first closed position.

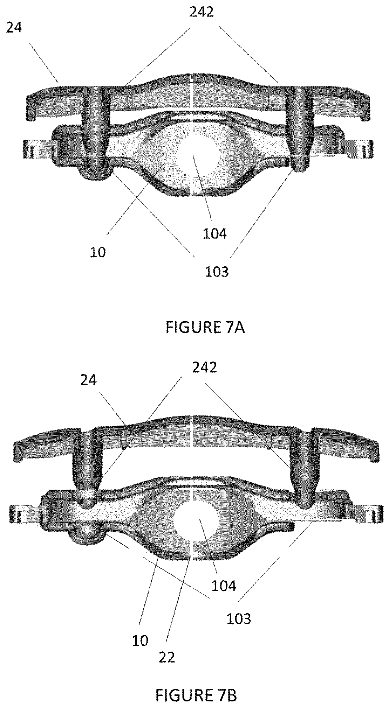

In **Figure 7B** corresponding to the cross-sectional view of the assembly 2 taken along plane CC of Figure 6B, these two pins 242 are positioned away from the holes 103. In this position where the door 23 is opened, the operator is able to remove the pack form the pack holder or to introduce a new one if the chamber is empty.

**Figure 7A** corresponds to the same section as Figure 7B but in the situation where the door 23 is in the first closed position as illustrated in Figure 6A. Then, the bottom of the interacting device 24 is positioned close to the chamber 22 and, consequently, the pins 242 enter in the holes 103 of the pack that is present in the chamber. These corresponding pins and holes enable a correct position of the pack inside the chamber which guarantees a correct interaction with the fluid processing device 11. They also maintain firmly the pack during the introduction of the fluid processing device 11 and they prevent the upwardly movement of the pack inside the chamber when a fluid squirts inside the pack.

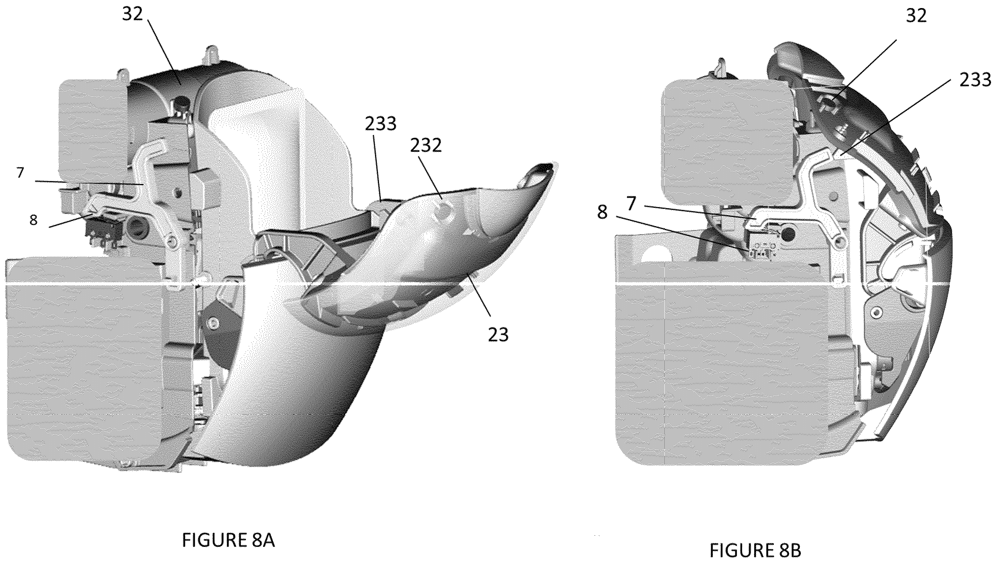

**Figures 8A and 8B** illustrates one preferred embodiment of the door 23 of the pack holder assembly.

Generally, the module comprises an electrical switch 8 that can be switched on or off depending on the position of the door, precisely if the door 23 is closed or opened. In particular, a part 233 of the door can be designed to move a member 7 configured to switch on the electrical switch.

Preferably, the receiving area 3 comprises at least one first magnet 32 and the door 23 comprises at least one corresponding second magnet 232 positioned in the receiving area and in the door respectively so that, when the door is closed, the first and second magnets cooperate. The position of these both magnets improves the closure of the door 23 during the beverage preparation when a pack inflates too much and is able to push and open the door. The position of the magnets close to the part 233 of the door designed to switch on the electrical switch improves the effect and holds the door even more firmly. Magnets provided at a lower position of the door were less efficient in keeping the door closed when the pack inflated.

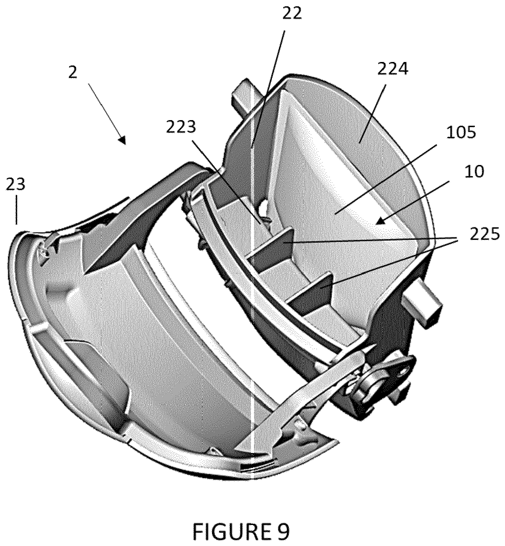

**Figure 9** is a top view of the opened pack holder assembly 2 with a pack 10 inside the chamber 22. In this preferred embodiment, below the door 23, the internal front wall 223 of the pack chamber comprises two ribs 225 that rise from this wall in direction of one of the longitudinal plane wall 105 of the pack. During the introduction of liquid at the bottom of the pack, these ribs 225 prevent an inflating of the wall 105 of the pack that could exert a force on the internal wall of the door and the opening of the latter. These ribs guarantee that the wall 105 of the pack remain away from the door 23 during the preparation.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | | | | |
|---|---|---|---|---|
| system | | | | 100 |
| module | | | | 1 |
| | fluid processing device | | | 11 |
| | | inlet means | | 111 |
| | | outlet means | | 112 |
| | | pointed part | | 113 |
| | actuating device | | | 12 |
| | | fluid source | | 13 |
| | | pumping means | | 14 |
| | | heating and/or cooling means | | 15 |
| | | system control unit | | 16 |
| | pack holder assembly | | | 2 |
| | | guiding means | | 21 |
| | | pack chamber | | 22 |
| | | | bottom opening | 221 |
| | | | pack inlet | 222 |
| | | | internal front wall | 223 |
| | | | back wall | 224 |
| | | | rib | 225 |
| | | | side opening | 226 |
| | | door | | 23 |
| | | | hinge | 231 |
| | | | magnet | 232 |
| | | | contacting part | 233 |
| | | | arm | 234 |
| | | locking device | | 24 |
| | | | connection | 241 |
| | | | pins | 242 |
| | | | pushing device | 243 |
| | | | hinge | 244 |
| | receiving area | | | 3 |
| | | guiding means | | 31 |
| | | magnet | | 32 |
| | | back wall | | 33 |
| | code reader | | | 4 |
| | frame | | | 5 |
| attached cover | | | | 6 |
| movable member | | | | 7 |
| electrical switch | | | | 8 |
| | pack | | | 10 |
| | bottom side | | | 101 |
| | code | | | 102 |
| | hole | | | 103 |
| | pierceable area | | | 104 |
| longitudinal plane wall | | | | 105 |
| lateral sealed edge | | | | 106 |
| top end | | | | 107 |

## Claims

1. A beverage production system comprising a pack (10) and a module (1) for producing a beverage from said pack,
- said pack (10) comprising an ingredient, said ingredient being configured to be mixed with a fluid to produce a beverage,
said pack presenting a plane shape oriented along a plane (P) and comprising two longitudinal plane walls (105) extending along this plane P, and
the bottom side (101) of said pack being configured for being openable, and
said pack (10) comprising at least one readable code (102), said code being positioned on at least one of the two longitudinal plane walls, and
- said module (1) comprising :
. a movable fluid processing device (11) configured to cooperate with the bottom of the pack to introduce a fluid in said pack and to dispense a beverage from the pack, and
. a code reader (4),
. a pack holder assembly (2), said pack holder assembly comprising a pack chamber (22) and a movable interacting device (24) wherein :
. the pack chamber (22) is adapted for receiving said pack (10) through an upper pack inlet (222) and for holding said pack so that the plane (P) of the plane shape is oriented in an essentially vertical position inside the module (1), and
said chamber presenting a bottom opening (221) configured to enable access of the movable fluid processing device (11) to at least the bottom side (101) of said pack hold in the chamber, and
said chamber presenting a side opening (226) positioned in front of the code reader (4),
. the movable interacting device (24) is configured to move between :
- a first fixing position wherein said interacting device interacts with the pack (10) received in the chamber, and,
- a second release position wherein said interacting device does not interact with the pack (10) received in the chamber,
**characterized in that**
said movable interacting device (24) comprises a pushing device (243) configured so that :
. when the movable interacting device (24) moves to the first fixing position, said pushing device pushes the readable code (102) of the pack received in the chamber to a reading head (41) of the code reader (4) until said readable code is in contact with the reading head (41),
. when the movable interacting device (24) is in the second release position, said pushing device is positioned away from the pack received in the chamber.

2. System according to Claim 1, wherein the lateral edges (106) of two longitudinal plane walls of the pack are sealed to each other and form a sealing area and the readable code (102) is positioned at least on a part of said sealing area.

3. System according to Claim 2, wherein the readable code (102) is positioned on a sealing area close to the bottom of the pack.

4. System according to any one of the precedent claims, wherein the pack holder assembly comprises a door (23), said door (23) being movable relatively to the pack chamber and being configured to be positioned in at least :
. a first closed position wherein said door covers the pack inlet of the pack chamber and is able to enclose the pack inside the pack chamber, and
. a second opened position wherein said door uncovers the pack inlet of the pack chamber, and
. wherein the movable interacting device (24) is mechanically connected to the door (23) so that said movable interacting device is configured to be pushed away from the chamber when the door is in the second opened position and to be pushed to the chamber when the door is in the first closed position.

5. System according to the precedent claim, wherein the pack (10) comprises at last two holes (103) and/or deformable areas and the locking device (24) comprises corresponding locking means, preferably pins (242), configured to fit in said holes and/or deformable areas of the pack when the door (23) is in the first closed position.

6. System according to any one of the precedent claims, wherein the fluid processing device (11) comprises :
- at least one fluid inlet (111) for introducing a fluid into the pack (10) hold in the chamber (22) for the preparation of a beverage by mixing said fluid with the ingredient contained in said pack, and
- at least one beverage outlet (112) for dispensing said prepared beverage from said pack hold in the chamber.

7. System according to claim 4 and any one of the precedent claims, wherein :
- the module (1) comprises :
. a receiving area (3) configured to hold the pack holder assembly (2), and
. an electrical switch (8),
and
- when the pack holder assembly (2) is positioned in said receiving area (3), a contacting part (233) of the door is designed to cooperate with the electrical switch so that :
. in the second opened position of the door, said contacting part (233) of the door directly or indirectly switches off the electrical switch (8), and
. in the first closed position of the door, said contacting part (233) of the door directly or indirectly switches on the electrical switch (8).

8. System according to claim 4 and any one of the precedent claims, wherein :
- the module (1) comprises a receiving area (3) configured to receive and hold the pack holder assembly (2) and said receiving area (3) comprises at least one first magnet (32), and
- the door (23) comprises at least one corresponding second magnet (232),
wherein said first magnet and said second magnet are positioned in the receiving area and in the door respectively so that, when the door is closed, the first and second magnets cooperate.

9. System according the precedent claim, wherein said first magnet and said second magnet are positioned at the upper parts of the receiving area and of the door respectively.

10. System according to the precedent claim and Claim 7, wherein the contacting part (233) of the door is positioned in the upper part of the door.

11. System according to claim 4 and any one of the precedent claims, wherein the pack chamber (22) comprises an internal front wall (223), said internal front wall being positioned below the movable door (23), and
wherein at least one rib (225) rises from said internal front wall (223) inside the chamber.

12. Pack holder assembly (2) for a beverage production system, said system comprising a pack (10) and a beverage producing module (1), said pack presenting a plane shape oriented along a plane (P) and comprising two longitudinal plane walls (105) extending along said plane (P) and comprising a readable code (102), said code being positioned on at least one of the two longitudinal plane walls, and the beverage producing module comprising a code reader (4),
said pack holder assembly comprising a pack chamber (22) and a movable interacting device (24) wherein:
- the pack chamber (22) defines an internal volume adapted for receiving a pack (10) through an upper pack inlet (222) and for holding said pack, and said chamber presents a side opening (226) configured to face the code reader of the module,
- the movable interacting device (24) is configured to move between a first fixing position and a second release position, **characterized in that** said movable interacting device (24) comprises a pushing device (243) configured so that :
. when the movable interacting device (24) is in the first interacting position, said pushing device (243) is positioned inside the internal volume of the chamber so as to be close to and in contact with a part of the pack (10) to push the part of the pack (10) comprising the readable code (102) and that is accessible through the side opening (226) to a reading head (41) of the code reader (4), and
. when the movable interacting device (24) is in the second release position, said pushing device is removed from the internal volume of the chamber.

13. Pack holder assembly (2) for a beverage production system according to the precedent claim, wherein the pack holder assembly comprises a door (23), said door (23) being movable relatively to the pack chamber (2) and being configured to be positioned in at least :
. a first closed position wherein said door covers the pack inlet (222) of the pack chamber, and
. a second opened position wherein said door uncovers the pack inlet (222) of the pack chamber, and
wherein the movable interacting device (24) is mechanically connected to the door (23) so that it is configured to be pushed away from the chamber (22) when the door is in the second opened position and to be pushed to the chamber (22) when the door is in the first closed position.

14. Pack holder assembly (2) for a beverage production system according to the precedent claim, wherein the door (23) comprises at least one magnet (232), said magnet being positioned at the upper side of the door.

15. Pack holder assembly (2) for a beverage production system according to the precedent claim, wherein the door (23) comprises a contacting part (233) designed to cooperate with an electrical switch of the module, said contacting part (233) being positioned in the upper part of the door.

16. Use of a pack holder assembly (2) according to any one of Claims 12 to 15 in a beverage production system according to any one of Claims 1 to 11.

## Patentansprüche

1. Getränkeherstellungssystem, umfassend eine Packung (10) und ein Modul (1) zum Herstellen eines Getränks aus der Packung,
- die Packung (10) umfassend eine Zutat, wobei die Zutat konfiguriert ist, um mit einer Flüssigkeit gemischt zu werden, um ein Getränk herzustellen,
wobei die Packung eine ebene Form darstellt, die entlang einer Ebene (P) ausgerichtet ist und zwei längliche ebene Wände (105) umfasst, die sich entlang dieser Ebene P erstrecken, und
wobei die Bodenseite (101) der Packung konfiguriert ist, um öffenbar zu sein, und
die Packung (10) umfassend mindestens einen lesbaren Code (102), wobei der Code auf mindestens einer der zwei länglichen ebenen Wände positioniert ist, und
- das Modul (1) umfassend:
. eine bewegliche Flüssigkeitsverarbeitungsvorrichtung (11), die konfiguriert ist, um mit dem Boden der Packung zusammenzuwirken, um eine Flüssigkeit in die Packung einzuführen und um ein Getränk aus der Packung auszugeben, und
. einen Codeleser (4),
. eine Packungshalteranordnung (2), die Packungshalteranordnung umfassend eine Packungskammer (22) und eine bewegliche Interaktionsvorrichtung (24), wobei:
. die Packungskammer (22) zum Aufnehmen der Packung (10) durch einen oberen Packungseinlass (222) und zum Halten der Packung angepasst ist, sodass die Ebene (P) der ebenen Form in einer im Wesentlichen vertikalen Position innerhalb des Moduls (1) ausgerichtet ist, und
wobei die Kammer eine Bodenöffnung (221) darstellt, die konfiguriert ist, um der beweglichen Flüssigkeitsverarbeitungsvorrichtung (11) Zugang zu mindestens der Bodenseite (101) der Packung, die in der Kammer gehalten wird, zu ermöglichen, und
wobei die Kammer eine seitliche Öffnung (226) darstellt, die vor dem Codeleser (4) positioniert ist,
. die bewegliche Interaktionsvorrichtung (24) konfiguriert ist, um sich zu bewegen zwischen:
- einer ersten Befestigungsposition, wobei die Interaktionsvorrichtung mit der Packung (10) interagiert, die in der Kammer aufgenommen ist, und
- einer zweiten Freigabeposition, wobei die Interaktionsvorrichtung nicht mit der Packung (10) interagiert, die in der Kammer aufgenommen ist,
**dadurch gekennzeichnet, dass**
die bewegliche Interaktionsvorrichtung (24) eine Schubvorrichtung (243) umfasst, die konfiguriert ist, sodass:
. wenn sich die bewegliche Interaktionsvorrichtung (24) in die erste Befestigungsposition bewegt, die Schubvorrichtung den lesbaren Code (102) der Packung, die in der Kammer aufgenommen ist, zu einem Lesekopf (41) des Codelesers (4) geschoben wird, bis der lesbare Code mit dem Lesekopf (41) in Kontakt steht,
. wenn sich die bewegliche Interaktionsvorrichtung (24) in der zweiten Freigabeposition befindet, die Schubvorrichtung von der Packung, die in der Kammer aufgenommen ist, weg positioniert wird.

2. System nach Anspruch 1, wobei die Seitenkanten (106) von zwei länglichen ebenen Wänden der Packung miteinander versiegelt sind und einen Versiegelungsbereich bilden und der lesbare Code (102) mindestens auf einem Teil des Versiegelungsbereichs positioniert ist.

3. System nach Anspruch 2, wobei der lesbare Code (102) auf einem Versiegelungsbereich nahe dem Boden der Packung positioniert ist.

4. System nach einem der vorstehenden Ansprüche, wobei die Packungshalteranordnung eine Tür (23) umfasst, wobei die Tür (23) relativ zu der Packungskammer beweglich ist und konfiguriert ist, um positioniert zu werden in mindestens:
. einer ersten geschlossenen Position, wobei die Tür den Packungseinlass der Packungskammer abdeckt und in der Lage ist, die Packung innerhalb der Packungskammer zu umschließen, und
. einer zweiten geöffneten Position, wobei die Tür den Packungseinlass der Packungskammer freilegt, und
wobei die bewegliche Interaktionsvorrichtung (24) mit der Tür (23) mechanisch verbunden ist, sodass die bewegliche Interaktionsvorrichtung konfiguriert ist, um von der Kammer weggeschoben zu werden, wenn sich die Tür in der zweiten geöffneten Position befindet, und in die Kammer geschoben zu werden, wenn sich die Tür in der ersten geschlossenen Position befindet.

5. System nach dem vorstehenden Anspruch, wobei die Packung (10) mindestens zwei Löcher (103) und/oder verformbare Bereiche umfasst und die Verriegelungsvorrichtung (24) entsprechende Verriegelungsmittel umfasst, vorzugsweise Stifte (242), die konfiguriert sind, um in die Löcher und/oder verformbaren Bereiche der Packung zu passen, wenn sich die Tür (23) in der ersten geschlossenen Position befindet.

6. System nach einem der vorstehenden Ansprüche, wobei die Flüssigkeitsverarbeitungsvorrichtung (11) umfasst:
- mindestens einen Flüssigkeitseinlass (111) zum Einführen einer Flüssigkeit in die Packung (10), die in der Kammer (22) gehalten wird, für die Zubereitung eines Getränks durch Mischen der Flüssigkeit mit der Zutat, die in der Packung enthalten ist, und
- mindestens einen Getränkeauslass (112) zum Ausgeben des zubereiteten Getränks aus der Packungshalterung in der Kammer.

7. System nach Anspruch 4 und einem der vorstehenden Ansprüche, wobei:
- das Modul (1) umfasst:
. einen Aufnahmebereich (3), der konfiguriert ist, um die Packungshalteranordnung (2) zu halten, und
. einen elektrischen Schalter (8),
und
- wenn die Packungshalteranordnung (2) in dem Aufnahmebereich (3) positioniert ist, ein Kontaktteil (233) der Tür ausgebildet ist, um mit dem elektrischen Schalter zusammenzuwirken, sodass:
. in der zweiten geöffneten Position der Tür das Kontaktteil (233) der Tür den elektrischen Schalter (8) direkt oder indirekt ausschaltet, und
. in der ersten geschlossenen Position der Tür das Kontaktteil (233) der Tür den elektrischen Schalter (8) direkt oder indirekt einschaltet.

8. System nach Anspruch 4 und einem der vorstehenden Ansprüche, wobei:
- das Modul (1) einen Aufnahmebereich (3) umfasst, der konfiguriert ist, um die Packungshalteranordnung (2) aufzunehmen und zu halten, und der Aufnahmebereich (3) mindestens einen ersten Magneten (32) umfasst, und
- die Tür (23) mindestens einen entsprechenden zweiten Magnet (232) umfasst,
wobei der erste Magnet und der zweite Magnet in dem Aufnahmebereich beziehungsweise in der Tür positioniert sind, sodass, wenn die Tür geschlossen ist, der erste und der zweite Magnet zusammenwirken.

9. System nach dem vorstehenden Anspruch, wobei der erste Magnet und der zweite Magnet an den oberen Teilen des Aufnahmebereichs beziehungsweise der Tür positioniert sind.

10. System nach dem vorstehenden Anspruch und Anspruch 7, wobei das Kontaktteil (233) der Tür in dem oberen Teil der Tür positioniert ist.

11. System nach Anspruch 4 und einem der vorstehenden Ansprüche, wobei die Packungskammer (22) eine innere Vorderwand (223) umfasst, wobei die innere Vorderwand unterhalb der beweglichen Tür (23) positioniert ist und
wobei sich innerhalb der Kammer mindestens eine Rippe (225) von der inneren Vorderwand (223) erhebt.

12. Packungshalteranordnung (2) für ein Getränkeherstellungssystem, das System umfassend eine Packung (10) und ein Getränkeherstellungsmodul (1), wobei die Packung eine ebene Form darstellt, die entlang einer Ebene (P) ausgerichtet ist und zwei längliche ebene Wände (105) umfasst, die sich entlang der Ebene (P) erstrecken und einen lesbaren Code (102) umfasst, wobei der Code auf mindestens einer der zwei länglichen ebenen Wände positioniert ist, und das Getränkeherstellungsmodul einen Codeleser (4) umfasst,
die Packungshalteranordnung umfassend eine Packungskammer (22) und eine bewegliche Interaktionsvorrichtung (24), wobei:
- die Packungskammer (22) ein inneres Volumen definiert, das zum Aufnehmen einer Packung (10) durch einen oberen Packungseinlass (222) und zum Halten der Packung angepasst ist, und die Kammer eine seitliche Öffnung (226) darstellt, die konfiguriert ist, um dem Codeleser des Moduls zugewandt zu sein,
- die bewegliche Interaktionsvorrichtung (24) konfiguriert ist, um sich zwischen einer ersten Befestigungsposition und einer zweiten Freigabeposition zu bewegen, **dadurch gekennzeichnet, dass**
die bewegliche Interaktionsvorrichtung (24) eine Schubvorrichtung (243) umfasst, die konfiguriert ist, sodass:
. wenn sich die bewegliche Interaktionsvorrichtung (24) in der ersten Interaktionsposition befindet, die Schubvorrichtung (243) innerhalb des inneren Volumens der Kammer positioniert ist, um nahe einem Teil der Packung (10) zu sein und mit diesem in Kontakt zu stehen, um den Teil der Packung (10), umfassend den lesbaren Code (102) und der durch die seitliche Öffnung (226) zugänglich ist, zu einem Lesekopf (41) des Codelesers (4) zu schieben, und
. wenn sich die bewegliche Interaktionsvorrichtung (24) in der zweiten Freigabeposition befindet, die Schubvorrichtung aus dem inneren Volumen der Kammer entfernt ist.

13. Packungshalteranordnung (2) für ein Getränkeherstellungssystem nach dem vorstehenden Anspruch, wobei die Packungshalteranordnung eine Tür (23) umfasst, wobei die Tür (23) relativ zu der Packungskammer (2) beweglich ist und konfiguriert ist, um positioniert zu werden in mindestens:
. einer ersten geschlossenen Position, wobei die Tür den Packungseinlass (222) der Packungskammer abdeckt, und
. einer zweiten geöffneten Position, wobei die Tür den Packungseinlass (222) der Packungskammer freilegt, und
wobei die bewegliche Interaktionsvorrichtung (24) mit der Tür (23) mechanisch verbunden ist, sodass sie konfiguriert ist, um von der Kammer (22) weggeschoben zu werden, wenn sich die Tür in der zweiten geöffneten Position befindet, und in die Kammer (22) geschoben zu werden, wenn sich die Tür in der ersten geschlossenen Position befindet.

14. Packungshalteranordnung (2) für ein Getränkeherstellungssystem nach dem vorstehenden Anspruch, wobei die Tür (23) mindestens einen Magneten (232) umfasst, wobei der Magnet an der oberen Seite der Tür positioniert ist.

15. Packungshalteranordnung (2) für ein Getränkeherstellungssystem nach dem vorstehenden Anspruch, wobei die Tür (23) ein Kontaktteil (233) umfasst, das ausgebildet ist, um mit einem elektrischen Schalter des Moduls zusammenzuwirken, wobei das Kontaktteil (233) in dem oberen Teil der Tür positioniert ist.

16. Verwendung einer Packungshalteranordnung (2) nach einem der Ansprüche 12 bis 15 in einem Getränkeherstellungssystem nach einem der Ansprüche 1 bis 11.

## Revendications

1. Système de production de boissons comprenant un emballage (10) et un module (1) pour la production d'une boisson à partir dudit emballage,
- ledit emballage (10) comprenant un ingrédient, ledit ingrédient étant conçu pour être mélangé à un fluide afin de produire une boisson,
ledit emballage présentant une forme plane orientée le long d'un plan (P) et comprenant deux parois planes longitudinales (105) s'étendant le long de ce plan P, et
une face inférieure (101) dudit emballage étant conçue pour pouvoir être ouverte, et
ledit emballage (10) comprenant au moins un code lisible (102), ledit code étant positionné sur au moins l'une des deux parois planes longitudinales, et
- ledit module (1) comprenant :
. un dispositif mobile de traitement de fluides (11) conçu pour coopérer avec la face inférieure de l'emballage afin d'introduire un fluide dans ledit emballage et de distribuer une boisson à partir de l'emballage, et
. un lecteur de code (4),
. un ensemble de maintien d'emballage (2), ledit ensemble de maintien d'emballage comprenant une chambre à emballage (22) et un dispositif d'interaction mobile (24), dans lequel :
. la chambre à emballage (22) est adaptée pour recevoir ledit emballage (10) par une entrée d'emballage supérieure (222) et pour maintenir ledit emballage de sorte que le plan (P) de la forme plane soit orienté dans une position essentiellement verticale à l'intérieur du module (1), et
ladite chambre présentant une ouverture inférieure (221) conçue pour permettre l'accès du dispositif mobile de traitement de fluides (11) à au moins la face inférieure (101) dudit emballage maintenu dans la chambre, et
ladite chambre présentant une ouverture latérale (226) positionnée en face du lecteur de code (4),
. le dispositif d'interaction mobile (24) est conçu pour se déplacer entre :
- une première position de fixation, dans lequel ledit dispositif d'interaction n'interagit pas avec l'emballage (10) reçu dans la chambre, et
- une seconde position de libération, dans lequel ledit dispositif d'interaction n'interagit pas avec l'emballage (10) reçu dans la chambre,
**caractérisé en ce que**
ledit dispositif d'interaction mobile (24) comprend un dispositif de poussée (243) conçu de sorte que :
. lorsque le dispositif d'interaction mobile (24) se déplace vers la première position de fixation, ledit dispositif de poussée pousse le code lisible (102) de l'emballage reçu dans la chambre vers une tête de lecture (41) du lecteur de code (4) jusqu'à ce que ledit code lisible soit en contact avec la tête de lecture (41),
. lorsque le dispositif d'interaction mobile (24) est dans la seconde position de libération, ledit dispositif de poussée est positionné à l'écart de l'emballage reçu dans la chambre.

2. Système selon la revendication 1, dans lequel les bords latéraux (106) de deux parois planes longitudinales de l'emballage sont scellés l'un à l'autre et forment une zone de scellement, et le code lisible (102) est positionné sur une partie de ladite zone de scellement.

3. Système selon la revendication 2, dans lequel le code lisible (102) est positionné sur une zone de scellement proche du fond de l'emballage.

4. Système selon l'une quelconque des revendications précédentes, dans lequel l'ensemble de maintien d'emballage comprend une porte (23), ladite porte (23) étant mobile par rapport à la chambre à emballage et étant conçue pour être positionnée dans au moins :
. une première position fermée, dans lequel ladite porte couvre l'entrée d'emballage de la chambre à emballage et peut enfermer l'emballage à l'intérieur de la chambre à emballage, et
. une seconde position ouverte, dans lequel ladite porte découvre l'entrée d'emballage de la chambre à emballage, et
dans lequel le dispositif d'interaction mobile (24) est relié mécaniquement à la porte (23) de sorte que ledit dispositif d'interaction mobile est conçu pour être poussé à l'écart de la chambre lorsque la porte est dans la seconde position ouverte et pour être poussé vers la chambre lorsque la porte est dans la première position fermée.

5. Système selon la revendication précédente, dans lequel l'emballage (10) comprend au moins deux trous (103) et/ou des zones déformables et le dispositif de verrouillage (24) comprend des moyens de verrouillage correspondants, de préférence des broches (242), conçus pour s'insérer dans lesdits trous et/ou zones déformables de l'emballage lorsque la porte (23) est dans la première position fermée.

6. Système selon l'une quelconque des revendications précédentes, dans lequel le dispositif de traitement de fluide (11) comprend :
- au moins une entrée de fluide (111) pour introduire un fluide dans l'emballage (10) maintenu dans la chambre (22) pour la préparation d'une boisson en mélangeant ledit fluide avec l'ingrédient contenu dans ledit emballage, et
- au moins une sortie de boisson (112) pour distribuer ladite boisson préparée à partir dudit emballage maintenu dans la chambre.

7. Système selon la revendication 4 et l'un quelconque des revendications précédentes, dans lequel :
- le module (1) comprend :
. une zone de réception (3) conçue pour recevoir et maintenir l'ensemble de maintien d'emballage (2), et
. un interrupteur électrique (8),
et
- lorsque l'ensemble de maintien d'emballage (2) est positionné dans ladite zone de réception (3), une partie de contact (233) de la porte est conçue pour coopérer avec l'interrupteur électrique de sorte que :
. dans la seconde position ouverte de la porte, ladite partie de contact (233) de la porte ouvre directement ou indirectement l'interrupteur électrique (8), et
. dans la première position fermée de la porte, ladite partie de contact (233) de la porte ferme directement ou indirectement l'interrupteur électrique (8).

8. Système selon la revendication 4 et l'un quelconque des revendications précédentes, dans lequel :
- le module (1) comprend une zone de réception (3) conçue pour recevoir et maintenir l'ensemble de maintien d'emballage (2) et ladite zone de réception (3) comprend au moins un premier aimant (32), et
- la porte (23) comprend au moins un second aimant correspondant (232),
dans lequel ledit premier aimant et ledit second aimant sont positionnés respectivement dans la zone de réception et dans la porte de sorte que, lorsque la porte est fermée, les premier et second aimants coopèrent.

9. Système selon la revendication précédente, dans lequel ledit premier aimant et ledit second aimant sont positionnés respectivement au niveau des parties supérieures de la zone de réception et de la porte.

10. Système selon la revendication précédente et la revendication 7, dans lequel la partie de contact (233) de la porte est positionnée dans la partie supérieure de la porte.

11. Système selon la revendication 4 et l'une quelconque des revendications précédentes, dans lequel la chambre à emballage (22) comprend une paroi frontale interne (223), ladite paroi frontale interne étant positionnée au-dessous de la porte mobile (23) et
dans lequel au moins une nervure (225) s'élève de ladite paroi frontale interne (223) à l'intérieur de la chambre.

12. Ensemble de maintien d'emballage (2) pour un système de production de boissons, ledit système comprenant un emballage (10) et un module de production de boissons (1), ledit emballage présentant une forme plane orientée le long d'un plan (P) et comprenant deux parois planes longitudinales (105) s'étendant le long dudit plan (P) et comprenant un code lisible (102), ledit code étant positionné sur au moins l'une des deux parois planes longitudinales, et le module de production de boissons comprenant un lecteur de code (4),
ledit ensemble de maintien d'emballage comprenant une chambre à emballage (22) et un dispositif d'interaction mobile (24) dans lequel :
- la chambre d'emballage (22) définit un volume interne adapté pour recevoir un emballage (10) par une entrée d'emballage supérieure (222) et pour maintenir ledit emballage, et ladite chambre présente une ouverture latérale (226) conçue pour faire face au lecteur de code du module,
- le dispositif d'interaction mobile (24) est conçu pour se déplacer entre une première position de fixation et une seconde position de libération, **caractérisé en ce que**
ledit dispositif d'interaction mobile (24) comprend un dispositif de poussée (243) conçu de sorte que :
. lorsque le dispositif d'interaction mobile (24) est dans la première position d'interaction, ledit dispositif de poussée (243) est positionné à l'intérieur du volume interne de la chambre de manière à être proche de et en contact avec une partie de l'emballage (10) pour pousser la partie de l'emballage (10) comprenant le code lisible (102) et qui est accessible à travers l'ouverture latérale (226) vers une tête de lecture (41) du lecteur de code (4), et
. lorsque le dispositif d'interaction mobile (24) est dans la seconde position de libération, ledit dispositif de poussée est retiré du volume interne de la chambre.

13. Ensemble de maintien d'emballage (2) pour un système de production de boissons selon la revendication précédente, dans lequel l'ensemble de maintien d'emballage comprend une porte (23), ladite porte (23) étant mobile par rapport à la chambre à emballage (2) et étant conçue pour être positionnée dans au moins :
. une première position fermée, dans lequel ladite porte couvre l'entrée de l'emballage (222) de la chambre à emballage, et
. une seconde position ouverte, dans lequel ladite porte découvre l'entrée d'emballage (222) de la chambre à emballage, et
dans lequel le dispositif d'interaction mobile (24) est relié mécaniquement à la porte (23) de sorte qu'il est conçu pour être poussé à l'écart de la chambre (22) lorsque la porte est dans la seconde position ouverte et pour être poussé vers la chambre (22) lorsque la porte est dans la première position fermée.

14. Ensemble de maintien d'emballage (2) pour un système de production de boissons selon la revendication précédente, dans lequel la porte (23) comprend au moins un aimant (232), ledit aimant étant positionné sur le côté supérieur de la porte.

15. Ensemble de maintien d'emballage (2) pour un système de production de boissons selon la revendication précédente, dans lequel la porte (23) comprend une partie de contact (233) conçue pour coopérer avec un interrupteur électrique du module, ladite partie de contact (233) étant positionnée dans la partie supérieure de la porte.

16. Utilisation d'un ensemble de maintien d'emballage (2) selon l'une quelconque des revendications 12 à 15 dans un système de production de boissons selon l'une quelconque des revendications 1 à 11.
